# EUROPEAN PATENT APPLICATION

(11) **EP 1 107 473 A2**
(43) Date of publication of application: **13.06.2001**
(21) Application number: 00125357.4
(22) Date of filing: 30.11.2000
(51) Int. Cl.: H04B 7/005

(54) **Variable CDMA transmission power control cycle**

(30) Priority: 01.12.1999 JP 34254499
(71) Applicant: NEC CORPORATION, Tokyo (JP)
(72) Inventor: Funamori, Shinichi, Minato-ku, Tokyo (JP)
(74) Representative: VOSSIUS & PARTNER

(57) **Abstract**

In a CDMA transmission power control system for controlling reverse transmission power of reverse transmission power for a mobile station, a Doppler frequency detector (50) detects a maximum Doppler frequency using a pilot symbol extracted from a desired transmission data signal per transmission power control period. When the maximum Doppler frequency is smaller than a Doppler frequency threshold, the system performs a closed loop control in a cycle of the transmission power control period. On the other hand, when the maximum Doppler frequency is larger than the Doppler frequency threshold, the system performs the closed loop control in a cycle of N times the transmission power control period in appearance.

## Description

This invention relates to a CDMA (Code Division Multiple Access) transmission power control method and system for carrying out a closed loop control for transmission power and, in particular, to a CDMA, transmission power control method and system that a base station carries out transmission power control for a mobile station.

In a CDMA mobile communication system, a base station can communicate with a plurality of mobile stations by using the same frequency band at the same time. That is, the base station receives a received signal including a plurality of reverse transmission signals transmitted from the mobile stations.

Now, attention is directed to one of the transmission signal (hereinafter called a desired signal) transmitted by one of the mobile stations. The remaining signals included in the received signal will be called an undesired signal. The desired signal is affected by the undesired signal. In other words, to the desired signal, the undesired signal is interference. A degree of the interference to the desired signal depends on a reception electric power (or a reception electric field strength) of the undesired signal. If the mobile stations carry out the transmission with the same transmission power, positions of the mobile stations decide the degree of the interference for the desired signal and movement of the mobile stations changes the degree of the interference for the desired signal. Thus, communication quality of the CDMA mobile communication system depends on positions of the mobile stations on the above-mentioned condition. This situation is undesirable for subscribers (or users of the mobile stations) .

Therefore, in a conventional CDMA mobile communication system, a base station controls transmission power of mobile stations to provide a uniform communication quality regardless of positions of the mobile stations..

The base station carries out a closed loop control for transmission power of each of the mobile stations communicating with it. That is, the base station controls each of the mobile stations so that a signal to interference ratio (SIR) (or a desired to undesired signal electric power ratio) of the received signal is larger than a required value for communicating with the base station and converges a predetermined value. The base station repeats the closed loop control in a short cycle (e.g. 1500 times/second).

Because the base station controls the transmission power of the mobile stations as mentioned above, the communication quality is improved and equally provided to the mobile stations located in a service area of the base station. In addition, the closed loop control improves a communication capacity of the CDMA mobile communication system. Furthermore, the closed loop control incidentally suppresses power consumption of each of the mobile stations and extends the battery life of the each of the mobile stations.

In the meantime, a mobile communication system has a problem of fading caused by the movement of the mobile stations. For example, a base station considerably reduces its transmission power of a forward transmission signal when a received signal received by it has instantaneous large amplitude caused by the fading. Thus, the fading remarkably deteriorates a communication quality of the mobile communication system.

The closed loop control of the conventional CDMA mobile communication system assumes improvement of the receiving characteristic so as to prevent the fading.

However, the conventional CDMA mobile communication system has a problem that the closed loop control cannot deal with rapid change of the fading deteriorates the receiving characteristic of the base station.

If the transmission power control period T_{TPC} is shorter, the conventional CDMA mobile communication system can suppress the instantaneous change of the reception electric power. However, there is a limit to shortening of the transmission power control period T_{TPC} because each signal processing process (e.g. modulation, estimation of the SIR and so on) needs a certain time. In addition, the shortening of the transmission power control period T_{TPC} requires big change of algorithm of a program for the closed power control.

It is therefore an object of this invention to provide a CDMA transmission power control system capable of controlling transmission power of a mobile station without practical influence of fading.

It is another object of this invention to provide a CDMA transmission power control method for controlling transmission power of a mobile station without practical influence of fading.

It is still another object of this invention to provide a CDMA transmission power control system for controlling transmission power of a mobile station in a variable control cycle.

It is further still another object of this invention to provide a transmission power control system for controlling transmission power of a mobile station according to fading pitch or a maximum Doppler frequency.

It is yet another object of this invention to provide a transmission power control system capable of deal with rapid fading without shortening a transmission power control period.

Other object of this invention will become clear as the description proceeds.

According to a first aspect of this invention, a CDMA transmission power control method is for controlling reverse transmission power. The method comprises the steps of judging whether fading of a reverse transmission data signal includes rapid change component or not by using a pilot symbol inserted in the reverse transmission data signal, normal adjusting the reverse transmission power per transmission power control period of the reverse transmission data signal while the fading does not has the rapid change component, and abnormal adjusting the reverse transmission power per N (N: integer larger than 1) times the transmission power control period while the fading has the rapid change component.

In the CDMA transmission power control method of the first aspect, the judging step comprises the steps of finding a maximum Doppler frequency within each transmission power control period of the reverse transmission data signal by using the pilot symbol, and comparing the maximum Doppler frequency with a frequency threshold to judge whether the fading includes the rapid change component or not.

In the CDMA transmission power control method of the first aspect, the abnormal adjusting step repeats two steps of maintaining the reverse transmission power for N-1 times the transmission power control period, and adjusting the reverse transmission power in the transmission power control period.

In the CDMA transmission power control method of the first aspect, the method further comprises the steps of normal measuring an average strength of the pilot symbol per transmission power control period while the fading does not has the rapid change component, abnormal measuring an averaging strength of the pilot symbol per N times transmission power control period while the fading has the rapid change component, estimating a signal to interfering ratio on the basis of the average strength of the pilot symbol, and comparing the signal to interfering ratio with a target to carry out the normal and the abnormal adjusting steps.

According to a second aspect of this invention, a CDMA transmission power control method is for controlling reverse transmission power in a CDMA mobile communication system including a base station and a mobile station. The method comprising the steps of receiving, in said base station, a reverse transmission data signal transmitted from said mobile station, the reverse transmission data signal has a pilot symbol inserted in the reverse transmission data signal per transmission power control period, extracting, in said base station, the pilot symbol from the reverse transmission data signal per transmission power control period, finding, in said base station, a maximum Doppler frequency by using the pilot symbol per transmission power control period, comparing, in said base station, the maximum Doppler frequency with a threshold frequency, expanding, in said base station, an apparent transmission power control period into N (N: integer larger than 1) times the transmission power control period when the maximum Doppler frequency is larger than the threshold frequency.

In the CDMA transmission power control method of the second aspect, the expanding step is realized by the step of maintaining the transmission power for N-1 times the transmission power control period in the apparent transmission control period.

In the CDMA transmission power control method of the second aspect, the method further comprises the steps of normal measuring an average strength of the pilot symbol per transmission power control period when the maximum Doppler frequency is smaller than the threshold frequency, abnormal measuring an average strength of the pilot symbol per N times the transmission power control period when the maximum Doppler frequency is larger than the threshold frequency, and adjusting the transmission power according to the average strength of the pilot symbol.

According to a third aspect of this invention, a CDMA transmission power control system is for controlling reverse transmission power. The CDMA transmission power control system comprises a Doppler frequency detector detecting a maximum Doppler frequency of a reverse transmission data signal per transmission power control period. A transmission power control bit producing unit is connected to the Doppler frequency detector and produces transmission power control bits in a variable cycle depending on the Doppler frequency.

In the CDMA transmission power control system of the third aspect, the CDMA transmission power control system further comprises a RAKE synthesizer for extracting a pilot symbol from the reverse transmission data signal per transmission power control period to supply the pilot symbol to the Doppler frequency detector. The Doppler frequency detector detects the maximum Doppler frequency by using the pilot symbol.

In the CDMA transmission power control system of the third aspect, the transmission power control bit producing unit comprises a signal electric power averaging section connected to the Doppler frequency detector to produce an estimated signal to interfering ratio per transmission power control period when the maximum Doppler frequency is smaller than a frequency threshold and per N times transmission power control period when the maximum Doppler frequency is larger than the frequency threshold. A memory memorizes a target signal to interfering ratio. A comparator is connected to the signal electric power averaging section and the memory and compares the estimated signal to interfering ratio with the target signal to interfering ratio to produce transmission power control bits. The comparator produces an additional transmission power control bits per transmission power control period to maintain the reverse transmission power when the estimated signal to interfering ratio is not supplied from said signal electric power averaging section and when the maximum Doppler frequency is larger than the frequency threshold.

### BRIEF DESCRIPTION OF THE DRAWINGS:

Fig. 1 is a block diagram of a conventional CDMA transmission power control system;
Fig. 2A shows a reverse transmission data sequence;
Fig. 2B shows a forward transmission data sequence;
Fig. 3A is a graph of reception power against time in a case where closed loop control for reverse transmission power is not carried out and where fading does not includes rapid change;
Fig. 3B is a graph of reception power against time in a case where the closed loop control is carried out and where the fading does not includes the rapid change;
Fig. 4A is a graph of reception power against time in a case where closed loop control for reverse transmission power is not carried out and where fading includes rapid change;
Fig. 4B is a graph of reception power against time in a case where the closed loop control is carried out and where the fading includes the rapid change;
Fig. 5 is a block diagram of a CDMA transmission power control system according to a preferred embodiment of this invention;
Fig. 6 is a flowchart for describing an operation of the CDMA transmission power control system of Fig. 5;
Fig. 7A is a graph of reception power against time for a short time (e.g. few milliseconds) in a case where closed loop control for reverse transmission power is not carried out and where fading includes rapid change;
Fig. 7B is a graph of reception power against time for a long time (e.g. few seconds or dozens seconds) in the case where the closed loop control for the reverse transmission power is not carried out and where the fading includes the rapid change;
Fig. 7C is a graph of reception power against time for the long time in a case where the closed loop control is carried out and where the fading includes the rapid change; and
Fig. 8 is a graph of an apparent transmission power control period against a maximum Doppler frequency.

### DESCRIPTION OF THE PREFERRED EMBODIMENT:

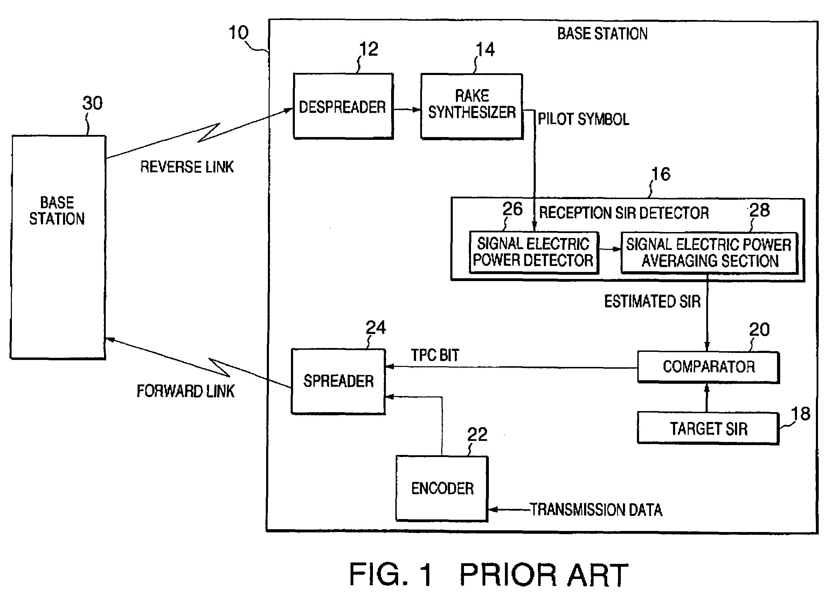

Referring to Figs. 1 through 3, description will be at first directed to a conventional CDMA mobile communication system or a conventional CDMA transmission power control system for a better understanding of this invention.

In Fig. 1, the CDMA mobile communication system comprises a base station 10 and a mobile station 30. The base station 10 carries out a close loop control of reverse transmission power for the mobile station 30. The base station 10 includes a despreader 12, a RAKE synthesizer 14, a received SIR detector 16, a target SIR memory 18, a comparator 20, a encoder 22, and a spreader 24.

The despreader 12 is connected to a transmitting/receiving section (not show) including an antenna and supplies a received signal from the transmitting/receiving section. The received signal includes a desired multi-path signal which includes an original reverse transmission signal transmitted from the mobile station 30 through an reverse link and a plurality of derivative transmission signals derived from the original reverse transmission signal. The received signal further includes an undesired signal which includes multi-pas signals supplied from other mobile stations (not shown).

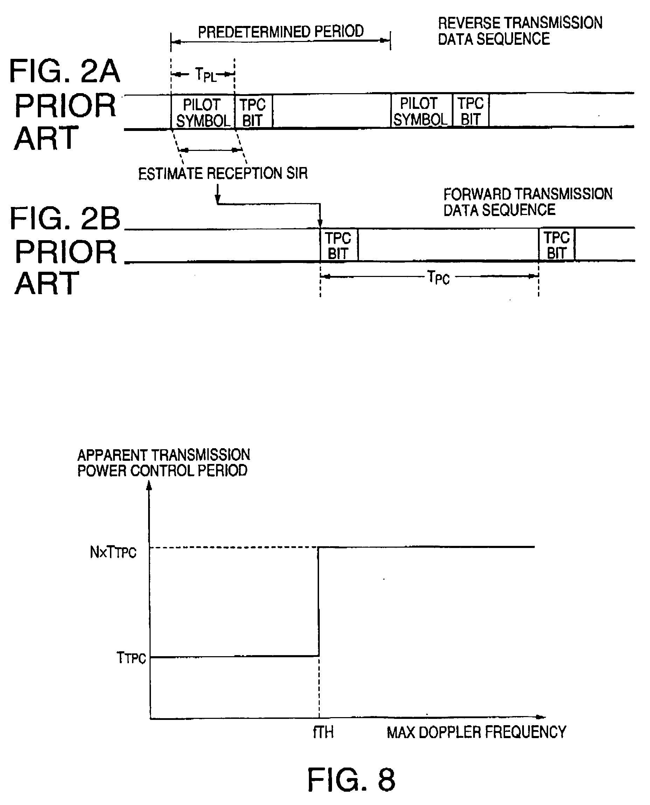

The original reverse transmission signal includes a reverse transmission data sequence as shown is Fig. 2A. The reverse transmission data sequence has a plurality of predetermined period each of which includes a pilot symbol period T_{PL}. In other words, the reverse transmission data sequence comprises user's data and the pilot symbol periodically inserted in the user's data. The pilot symbol is automatically inserted in the user's data in a cycle of the predetermined period at the mobile station 30 to form the reverse transmission data sequence. The derivative transmission signals are generated by reflection of the original transmission signal by buildings or the like and reach the base station 10 via different paths.

The despreader 12 despreads several of the original and derivative transmission signals by using a despreding code to produce path component signals having different delay times. For example, the despreader 12 despreads two or three of the original and the derivative transmission signals.

The RAKE synthesizer 14 is connected to the despreader 12 and receives the path component signals supplied from the despreader 12. The RAKE synthesizer 14 demodulates the path component signals by using the pilot symbols included in the path component signals and carries out RAKE synthesis (or maximum ratio synthesis) to synthesize the demodulated path component signals in a predetermined time window and to produce a synthesized signal. The synthesized signal is a desired transmission data signal in the base station. The RAKE synthesizer 14 extracts a synthesized pilot symbol from each predetermined period of the synthesized signal and supplies it to the received SIR detector 16 in the predetermined period cycle.

The received SIR detector 16 is connected to the RAKE synthesizer 14 and has a signal electric power detector 26 and a signal electric power averaging section 28.

The signal electric power detector 26 detects or finds reception electric power of the desired transmission data signal by measuring strength of the synthesized pilot symbol whenever it receives the synthesized pilot symbol supplied from the RAKE synthesizer 14. Then, the signal electric power detector 26 produces an electric power value signal representative of the reception electric power of the desired transmission data signal in the predetermined period cycle.

The signal electric power averaging section 28 calculates or measures an average of the reception electric power of the desired transmission data signal during it receives the electric power value signal. This means that the signal electric power averaging section 28 measures an average of the strength of the pilot symbol per pilot symbol period T_{PL} or in the cycle of the predetermined period. Then the signal electric power averaging section 28 estimates an estimated signal-to-interference ratio (SIR) on the basis of the average of the reception electric power of the desired transmission data signal in the cycle of the predetermined period. The estimated SIR represents an estimated ratio of the reception electric power of the desired transmission data signal to reception electric power of the undesired signal. Thus, the signal electric power averaging section 28 supplies the estimated SIR to the comparator 20 in the predetermined period cycle.

The target SIR memory 18 memorizes a target SIR decided at a side of the CDMA mobile communication system.

The comparator 20 is connected to the received SIT detector 16 and the target SIR memory 18. The comparator 20 compares the estimated SIR with the target SIR memorized in the target SIR memory 18 whenever it receives the estimated SIR from the signal electric power averaging section 28. As a result, the comparator 20 periodically produces a transmit power control bit (TPC bit) in the cycle of the predetermine period. The TPC bit is used for increasing the transmission power of the mobile station when the estimated SIR is larger than the target SIR while it is used for decreasing the transmission power of the mobile station when the estimated SIR is smaller than the target SIR.

The encoder 22 encodes a transmission data for transmitting to the mobile station 30 and produces an encoded data.

The spreader 24 is connected to the comparator 20, the encoder 22, and the transmitting/receiving section. The spreader 24 forms a forward transmission data sequence in which the TPC bit. is located in the cycle of the predetermined period as shown in Fig. 2B. In this case, the predetermined period is used as a transmission power control period T_{TPC}. Then, the spreader 24 spreads the forward transmission data sequence by using a spreading code for the mobile station 30.

The transmitting/receiving section transmits a forward transmission data sequence as a forward transmission signal for the mobile station 30 through a forward link.

The mobile station 30 receives the forward transmission signal and adjusting the transmission power according to the TPC bit included in each of the predetermined period of the forward transmission signal.

Thus, in the conventional CDMA mobile communication system, the base station 10 finds the estimated SIR for the pilot symbol period T_{PL} in each of transmission power control period T_{TPC} to control the transmission power of the mobile station 30.

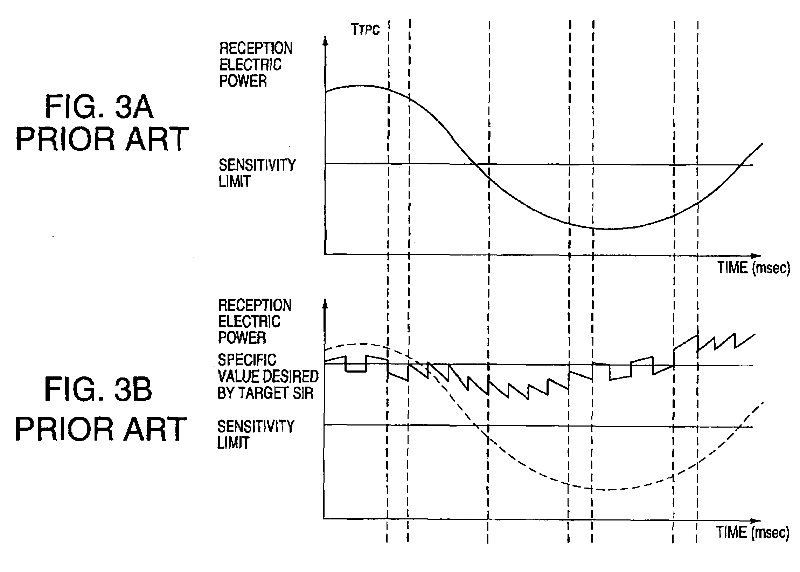

If the base station 10 does not carry out the closed loop control of transmitting power for the mobile station 30, the reception electric power of the desired transmission data signal is remarkably changed by fading as shown in Fig. 3A. On the other hand, when the base station 10 carries out the closed loop control for the mobile station 30, the reception electric power of the desired signal converges a specific value decided by the target SIR as shown in Fig. 3B.

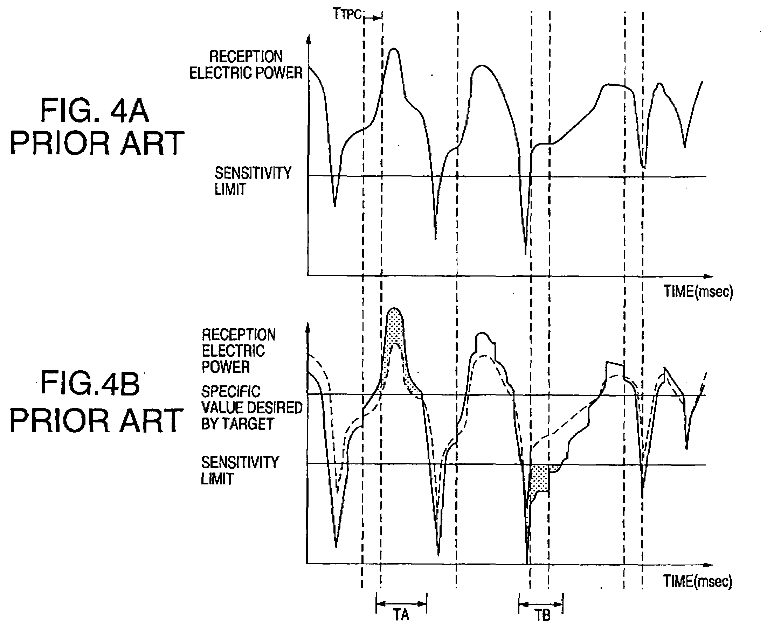

However, the conventional CDMA transmission power control system has a problem that it can not prevent rapid fading, such as shown in Fig. 4A, though it can prevent slow fading shown in Figs. 3A and 3B. That is, the conventional CDMA transmission power control system enlarges change of the reception electric power of the desired transmission data signal when the fading includes instantaneous change of the reception electric power of the desired transmission data signal within the transmission power control period T_{TPC} as shown in Fig. 4B. For example, the reception electric power of the desired transmission data signal is increased during the period of T_{A} of Fig. 4B by the closed loop control of the transmission power. This means that undesired signal for the other mobile stations increases. Moreover, the reception electric power of the desired signal is reduced under a sensitivity limit during the period of T_{B} of Fig. 4B by the closed loop control. This means that receiving sensitivity of the base station 10 deteriorates.

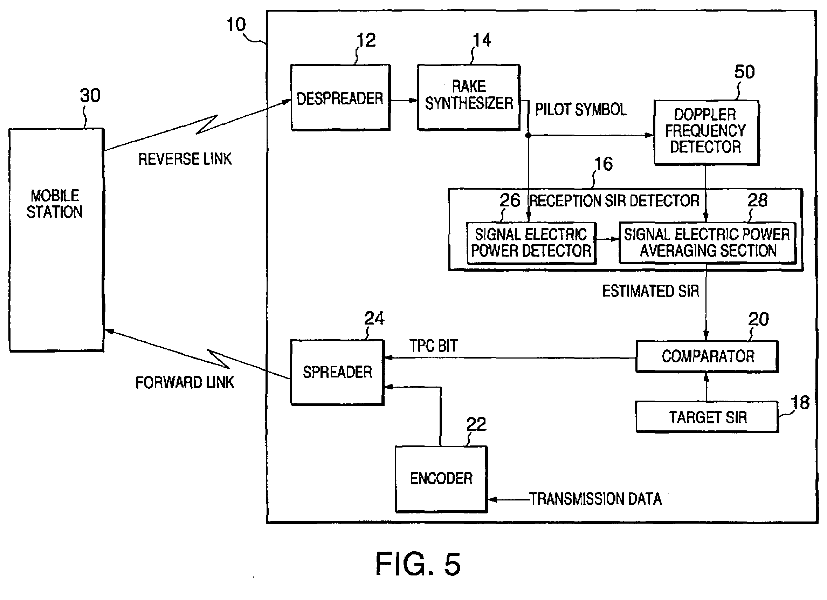

Referring to Figs. 5 through 8, the description will proceed to a CDMA mobile communication system or a CDMA transmission power control system according to a preferred embodiment of this invention. Similar parts are designated by like reference numerals.

In Fig. 5, the CDMA mobile communication system comprises a Doppler frequency detector 50 which is connected to the RAKE synthesizer 14 and the signal electric power averaging section 28.

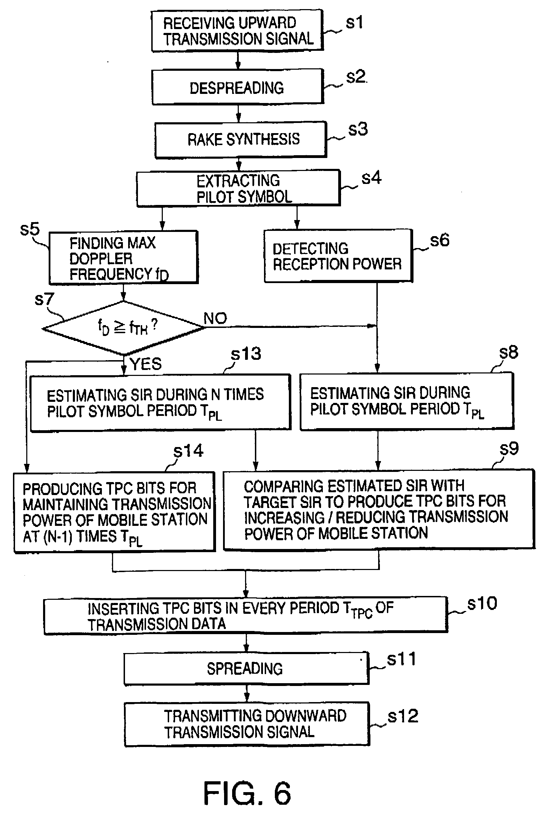

The CDMA mobile communication system operates as illustrated in Fig. 6. Steps sl-s4, s6, and s8-s12 nearly corresponds to the operation of the conventional CDMA mobile communication system.

In a step s5, the Doppler frequency detector 50 receives the synthesized pilot symbol from the RAKE synthesizer in the predetermined period cycle. In other words, the Doppler frequency detector 50 receives the synthesized pilot symbol per transmission control period T_{TPC}. The Doppler frequency detector 50 finds a maximum Doppler frequency f_{D} of the desired transmission data signal on the basis of the synthesized pilot symbol in each transmission power control period T_{TPC}.

In a step S7, the Doppler frequency detector 50 compares the maximum Doppler frequency f_{D} with a Doppler frequency threshold f_{TH} whenever it receives the synthesized pilot symbol. The Doppler frequency threshold f_{TH} depends on the transmission power control period T_{TPC}. For example, the Doppler frequency threshold f_{TH} is equal to 1/(8×T_{TPC}). Though a proportional constant is equal to 1/8 in this case, it may be appropriately selected.

When the maximum Doppler frequency f_{D} is smaller than the Doppler frequency threshold f_{TH}, the Doppler frequency detector 50 produces a result bit of "0". In this case, the step s7 goes to the step s8.

On the other hand, the maximum Doppler frequency f_{D} is not smaller than the Doppler frequency threshold f_{TH}, the Doppler frequency detector 50 produces a result bit of "1". In this case the step s7 goes to both steps s13 and s14.

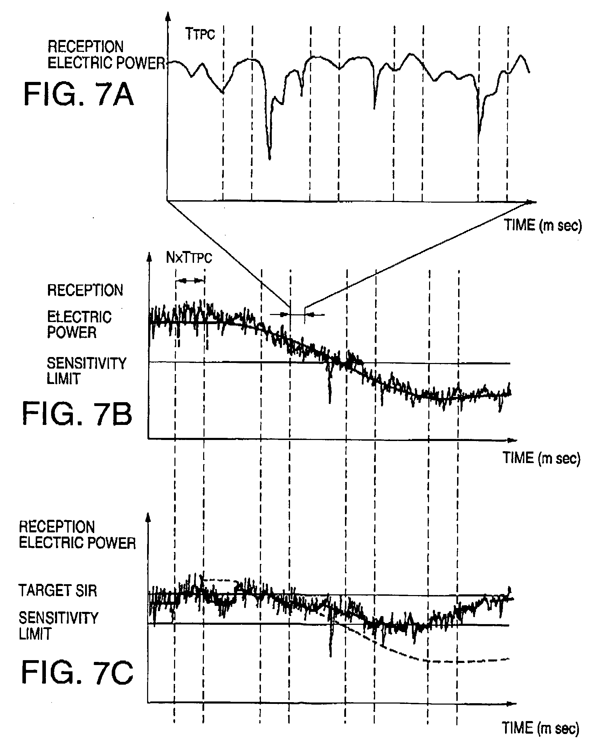

When the maximum Doppler frequency f_{D} is not smaller than the Doppler frequency threshold F_{TH}, a changing point is shown on a graph of the reception electric power of the desired transmission data signal between almost every transmission power control period T_{TPC} as shown in Fig. 7A (or Fig 4A) . The changing point is an extremum (i.e. a maximum or a minimum) or an inflection point and brought by rapid fading or the like. In such a case where the reception electric power has the changing point between every transmission power control period T_{TPC}, carrying out the conventional closed loop control deteriorates the receiving characteristic of the base station 10 (refer to Fig. 4B). Therefore, the Doppler frequency detector 50 substantially produces the result bit of "0" when the conventional closed loop control can suppress the fading. When the conventional closed loop control can not suppress the fading having rapid fading component, the Doppler frequency detector 50 substantially produces the result bit of "1".

Thus, the Doppler frequency detector 50 produces the result bit "0" or "1" per the transmission power control period T_{TPC}.

The signal electric power averaging section 28 is different from that of Fig. 1 in operation. In particular, the signal electric power averaging section 28 carries out a different or an abnormal operation when it receives the result bit of "1" from the Doppler frequency detector 50. When the signal electric power averaging section 28 receives the result bit of "0" from the Doppler frequency detector 50, it performs a normal operation like that of Fig. 1 in the step s8. The operation of the signal electric power averaging section 28 will be mentioned below in more detail.

When the signal electric power averaging section 28 receives the result bit of "0", it measures an average of the reception electric power of the desired signal between the pilot symbol period T_{PL} in response to the electric power value signal supplied from the signal electric power detector 26.

On the other hand, when the signal electric power averaging section 28 receives the result bit of "1" , it performs the step s13. That is, the signal electric power averaging section 28 measures an average of the reception electric power of the desired transmission signal between N times the pilot symbol period T_{PL} in response to the electric power value signals supplied N times from the signal electric power detector 26. "N" is an integer and considerably larger than 1. For example, "N" is 10. The signal electric power averaging section 28 produces the estimated SIR on the basis of the average of the reception electric power of the desired transmission signal. That is, the signal electric power averaging section 28 produces the estimated SIR per N times the transmission power control period T_{TPC}. Thus, the signal electric power averaging section 28 measures the average of the reception electric power of the desired transmission signal for a long time. Therefore, the estimated SIR has practically no influence of instantaneous change of the reception electric power.

In the step s9, the comparator 20 compares the estimated SIR with the target SIR memorized in the target SIR memory 18 whenever it receives the estimated SIR from the signal electric power averaging section 28. Then the comparator 20 produces TPC bits of "11" or "00" on the basis of the comparison result. The TPC bits of "11" is used for increasing the transmission power of the mobile station 30 while the TFC bits of "00" is used for reducing the transmission power of the mobile station 30. In addition, the comparator 20 performs the step s14 when the maximum Doppler frequency f_{D} is not smaller than the Doppler frequency f_{TH}. Namely, the comparator 20 produces the TPC bits of "10" or "01" (N-1) times correspondence to (N-1) times the pilot symbol period T_{PL} while the estimated SIR is not supplied from the signal electric power averaging section in the step s14. The TPC bits of "10" or "01 " is used for maintaining the transmission power of the mobile station 30. This is because the TPC bits must be inserted in each transmission power control period T_{TPC} of the forward transmission data sequence (refer to Fig. 2B) in the step s10. Thus, the comparator 20 produces one set of the TPC bits for changing the transmission power and (N-1) sets of the TPC bits for maintaining the transmission power per N times the transmission power control period T_{TPC} when the maximum Doppler frequency f_{D} is not smaller than the Doppler frequency f_{TH}. As a result, the closed loop control is carried out in a cycle of N times the transmission power control period T_{TPC} in appearance when the maximum Doppler frequency f_{D} is not smaller than the Doppler frequency f_{TH}. Fig. 8 shows relation between the maximum Doppler frequency with the apparent transmission power control period.

As mentioned above, the CDMA mobile communication system changes the apparent transmission power control period according to the maximum Doppler frequency. Accordingly, the CDMA mobile communication system can prevent deteriorating of the receiving characteristic of the base station and increasing of the interference power for the other mobile stations.

Generally, fading includes both of rapid fading component and slow fading component as shown in Fig. 7B. The slow fading component depends on density, heights and positions of buildings, undulations, and an interval between a mobile station and a base station. The CDMA mobile communication system of Fig. 5 can suppress the slow fading component by extending the apparent transmission power control period into from several milliseconds to several seconds or dozens seconds as shown in Fig. 7C. That is, the reception electric power converges the specific value depending the target SIR.

While this invention has thus for been described in conjunction with the preferred embodiment thereof, it will readily be possible for those skilled in the art to put this invention into practice in various other manners. For example, though the Doppler frequency detector 50 produces the result bit "1" when the maximum Doppler frequency F_{D} is equal to the Doppler frequency threshold F_{TH}, it may produces the result bit "0".

## Claims

1. A CDMA transmission power control method for controlling reverse transmission power, characterized by the steps of:
judging whether fading of a reverse transmission data signal includes rapid change component or not by using a pilot symbol inserted in the reverse transmission data signal;
normal adjusting the reverse transmission power per transmission power control period of the reverse transmission data signal while the fading does not have the rapid change component; and
abnormal adjusting the reverse transmission power per N (N: integer larger than 1) times the transmission power control period while the fading has the rapid change component.

2. A CDMA transmission power control method as claimed in Claim 1, characterized in that the judging step comprises the steps of:
finding a maximum Doppler frequency within each transmission power control period of the reverse transmission data signal by using the pilot symbol; and
comparing the maximum Doppler frequency with a frequency threshold to judge whether the fading includes the rapid change component or not.

3. A CDMA transmission power control method as claimed in Claim 1 or 2, characterized in that the abnormal adjusting step repeats two steps of:
maintaining the reverse transmission power for N-1 times the transmission power control period; and
adjusting the reverse transmission power in the transmission power control period.

4. A CDMA transmission power control method as claimed in any of Claims 1 to 3, characterized by further comprising the steps of:
normal measuring an average strength of the pilot symbol per transmission power control period while the fading does not has the rapid change component;
abnormal measuring an averaging strength of the pilot symbol per N times transmission power control period while the fading has the rapid change component;
estimating a signal to interfering ratio on the basis of the average strength of the pilot symbol; and
comparing the signal to interfering ratio with a target to carry out the normal and the abnormal adjusting steps.

5. A CDMA transmission power control method for controlling reverse transmission power in a CDMA mobile communication system including a base station and a mobile station, characterized by the steps of:
receiving, in said base station, a reverse transmission data signal transmitted from said mobile station, the reverse transmission data signal has a pilot symbol inserted in the reverse transmission data signal per transmission power control period;
extracting, in said base station, the pilot symbol from the reverse transmission data signal per transmission power control period;
finding, in said base station, a maximum Doppler frequency by using the pilot symbol per transmission power control period;
comparing, in said base station, the maximum Doppler frequency with a threshold frequency;
expanding, in said base station, an apparent transmission power control period into N (N: integer larger than 1) times the transmission power control period when the maximum Doppler frequency is larger than the threshold frequency.

6. A CDMA transmission power control method as claimed in Claim 5, characterized in that the expanding step comprises the step of:
maintaining the transmission power for N-1 times the transmission power control period in the apparent transmission control period.

7. A CDMA transmission power control method as claimed in Claim 5 or 6, characterized by further comprising the steps of:
normal measuring an average strength of the pilot symbol per transmission power control period when the maximum Doppler frequency is smaller than the threshold frequency;
abnormal measuring an average strength of the pilot symbol per N times the transmission power control period when the maximum Doppler frequency is larger than the threshold frequency; and
adjusting the transmission power according to the average strength of the pilot symbol.

8. A CDMA transmission power control system for controlling reverse transmission power, characterized by comprising:
a Doppler frequency detector detecting a maximum Doppler frequency of a reverse transmission data signal per transmission power control period; and
a transmission power control bit producing unit connected to the Doppler frequency detector for producing transmission power control bits in a variable cycle depending on the Doppler frequency.

9. A CDMA transmission power control system as claimed in Claim 8, characterized by further comprising:
a RAKE synthesizer for extracting a pilot symbol from the reverse transmission data signal per transmission power control period to supply the pilot symbol to said Doppler frequency detector, wherein said Doppler frequency detector detects the maximum Doppler frequency by using the pilot symbol.

10. A CDMA transmission power control system as claimed in Claim 8 or 9, characterized in that said transmission power control bit producing unit comprises:
a signal electric power averaging section connected to said Doppler frequency detector for producing an estimated signal to interfering ratio per transmission power control period when the maximum Doppler frequency is smaller than a frequency threshold and per N times transmission power control period when the maximum Doppler frequency is larger than the frequency threshold;
a memory memorizing a target signal to interfering ratio; and
a comparator connected to said signal electric power averaging section and said memory for comparing said estimated signal to interfering ratio with the target signal to interfering ratio to produce transmission power control bits,
wherein said comparator produces an additional transmission power control bits per transmission power control period to maintain the reverse transmission power when the estimated signal to interfering ratio is not supplied from said signal electric power averaging section and when the maximum Doppler frequency is larger than the frequency threshold.
